Europäisches Patentamt

European Patent Office

Office européen des brevets

(19)

(11) Veröffentlichungsnummer: **0 203 087**

**B1**

(12) # EUROPÄISCHE PATENTSCHRIFT

(45) Veröffentlichungstag der Patentschrift:
29.06.88

(51) Int. Cl.⁴: **B 65 G 1/04**

(21) Anmeldenummer: **85905047.8**

(22) Anmeldetag: **23.10.85**

(86) Internationale Anmeldenummer:
**PCT/CH 85/00157**

(87) Internationale Veröffentlichungsnummer:
**WO 86/03178 (05.06.86 Gazette 86/12)**

(54) **EINRICHTUNG ZUR LAGERUNG VON FLÄCHENHAFTEN GEGENSTÄNDEN.**

(30) Priorität: **29.11.84 CH 5688/84**

(43) Veröffentlichungstag der Anmeldung:
**03.12.86 Patentblatt 86/49**

(45) Bekanntmachung des Hinweises auf die Patenterteilung:
**29.06.88 Patentblatt 88/26**

(84) Benannte Vertragsstaaten:
**AT BE CH DE FR GB IT LI LU NL SE**

(56) Entgegenhaltungen:
**FR-A-2 506 275**
**US-A-3 840 131**

(73) Patentinhaber: **Sieber, Hans, Alpsteinstrasse 4, CH-9524 Zuzwil (CH)**

(72) Erfinder: **Sieber, Hans, Alpsteinstrasse 4, CH- 9524 Zuzwil (CH)**

(74) Vertreter: **Kulhavy, Sava, Dipl.- Ing., Patentanwaltsbüro S.V. Kulhavy Postfach 450 Kornhausstrasse 3, CH- 9001 St. Gallen (CH)**

## Beschreibung

Die vorliegende Erfindung betrifft eine Einrichtung zur Lagerung von flächenhaften Gegenständen, mit weingstens einem Gestell, mit wenigstens einem Behälter für die Gegenstände, wobei dieser Behälter im Gestell untergebracht sein kann, und mit einem Bedienungsgerät, mit dessen Hilfe der bzw. die Behälter gehandhabt werden können.

Eine bekannte Einrichtung dieser Art weist eine Reihe von nebeneinander stehenden Gestellen auf, in welchen mehrere Fächer zur Aufnahme von Behältern mit dem Lagergut ausgebildet sind. Das Bedienungsgerät weist Mittel auf, die die Handhabung der Behälter mit dem Lagergut ermöglichen. Solche Lagereinrichtungen dienen meistens als Lagerstätte für jenes Gut, das durch eine dem Lager nachgeschaltete Maschine verarbeitet wird.

Das Lagergut kann beispielsweise tafelförmig oder stangenförmig sein. Bei der Verarbeitung des Lagergutes in einer nachgeschalteten Verarbeitungsmaschine fällt "Abfall" an. Als Abfall werden jedoch auch grössere Stücke von Gut bezeichnet, nachdem dieses einem Verarbeitungsgang unterworfen worden ist. Solche grösseren Stücke von Lagergut werden oft tatsächlich weggeworfen, weil man nicht recht weiss, wie man solche Materialstücke lagern könnte, wie man aus diesen eines auswählen könnte, das noch ausreichende Abmessungen aufweist, usw. Dadurch entstehen beträchtliche Verluste.

Ein weiteres Problem betrifft die Geschwindigkeit der Auslagerung von Lagergut. Denn es werden ausserordentlich leistungsfähige Maschinen, z. B. Blechverarbeitungsmaschinen, gebaut, die eine sehr grosse Menge von Rohmaterial pro Zeiteinheit verarbeiten. Bekannte Bedienungsgeräte (aus der US-A-3840131 zum Beispiel) weisen in der Regel eine zu kleine Geschwindigkeit bei der Bedienung der Gestelle und bei der Zulieferung von ausgelagertem Gut zur Verarbeitungsmaschine auf. Bei so leistungsfähigen Verarbeitungsmaschinen kann es jedoch andererseits auch vorkommen, dass die Verarbeitungsmaschine während einer bestimmten Zeitspanne stillsteht. Dann muss das bereits angelieferte Gut während einer bestimmten Zeitspanne zwischengelagert werden. Dies ist bei den meisten bekannten Lagereinrichtungen kaum möglich.

Die Aufgabe der vorliegenden Erfindung ist eine Lagereinrichtung anzugeben, die die vorstehend besprochenen Nachteile nicht aufweist.

Diese Aufgabe wird bei der Einrichtung der eingangs genannten Art erfindungsgemäss so gelöst, wie dies im kennzeichne den Teil des Anspruchs 1 definiert ist.

Nachstehend werden Ausführungsbeispiele der vorliegenden Erfindung anhand der beiliegenden Zeichnungen näher erläutert. Es zeigt:

Fig. 1 schematisch eine Seitenansicht der vorliegenden Einrichtung,

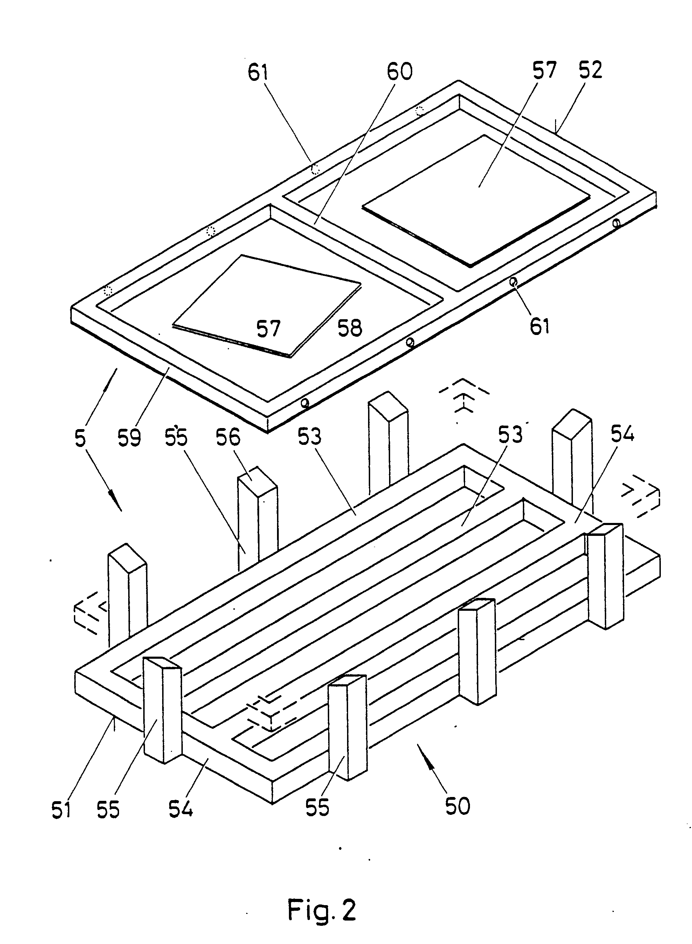

Fig 2 perspektivisch und in explodierter Darstellung einen Materialbehälter der Einrichtung nach Fig. 1 und

Fig. 3 perpektivisch und teilweise in einem vertikalen Schnitt das Bedienungsgerät der vorliegenden Einrichtung.

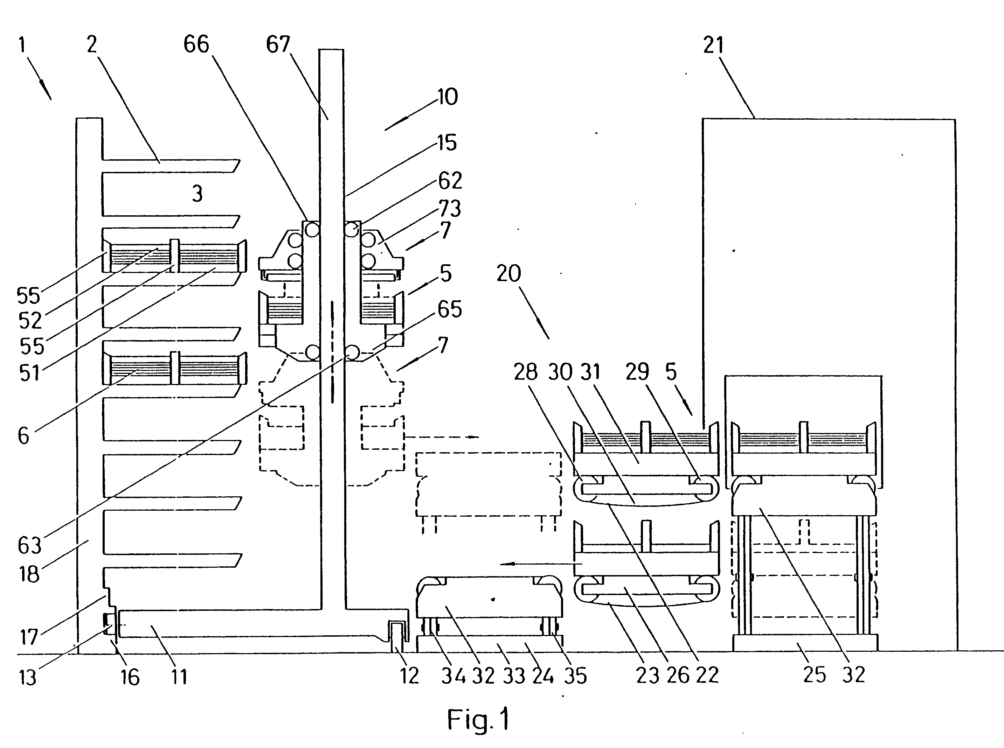

Die in Fig. 1 dargestellte Einrichtung weist Lagergestelle 1 auf, die nebeneinander stehen, so dass in der Seitenansicht in Fig. 1 nur das erste dieser Gestelle 1 dargestellt ist. Die Gestelle 1 weisen Konsolen 2 auf, welche Fächer 3 für Behälter 5 zur Aufnahme von Lagergut 6 begrenzen.

Dem bzw. den Gestellen 1 ist ein Gerät 10 zugeordnet, das unter anderem zur Bedienung der Lagergestelle 1 bestimmt ist. Dieses Bedienungsgerät 10 weist einen Grundrahmen 11 auf, der mit antreibbaren Rädern 12 und 13 zu beiden Seiten desselben versehen ist. Auf diesen Rädern 12 und 13 kann sich das Bedienungsgerät 10 entlang einer Reihe der Lagergestelle 1 bewegen. Der rechts liegende Satz von Rädern 12 rollt auf dem Boden des Lagers ab. Der links liegende Abschnitt des Grundrahmens 11 befindet sich teilweise unter den Konsolen 2 der Gestelle 1 und ist mit dem zweiten Satz von Rädern 13 versehen. Diese Massnahme vergrössert die Grundfläche des Rahmens 11 des Bedienungsgerätes 10 und sie spart zugleich den Bodenraum im Lager.

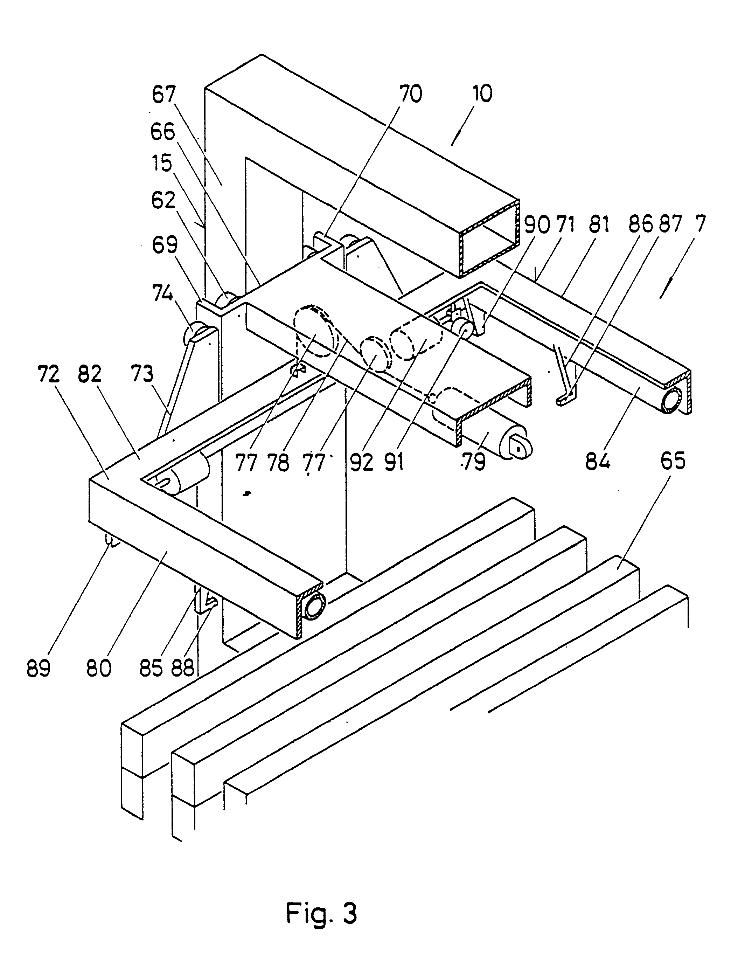

Auf dem Grundrahmen 11 ist ein vertikal verlaufender Teil 15 des Bedienungsgerätes 10 aufgerichtet, der zur Handhabung der Materialbehälter 5 ausgebilet ist. Der Vertikalteil 15 ist im wesentlichen U-förmig, wobei die Endpartien der Schenkel 67 (siehe auch Fig. 3 ) eines solchen Vertikalteils 15 mit dem Grundrahmen 11 fest verbunden sind. Entlang den genannten Schenkeln 67 ist eine Brücke 7 zur Aufnahme und Handhabung der Materialbehälter 5 bewegbar.

Der Vertikalteil 15 ist auf dem Grundrahmen 11 so angeordnet, dass die horizontale Entfernung dieses Vertikalteiles 15 von den auf dem Lagerboden rollenden Rädern 12 kleiner ist als die horizontale Entfernung desselben von den sich unter den Konsolen 2 befindlichen und auf einer Schiene 16 rollenden Rädern 13. Diese Massnahme verkleinert zwar den Verbrauch an Bodenfläche durch den Grundrahmen 11, sie vergrössert jedoch zugleich die Gefahr eines Kippens des Bedienungsgerätes 10, wenn es mit einem Materialbehälter 5 beladen ist. Um diese Gefahr zu eliminieren, sind die Gestelle 1 im Bewegungsbereich der links dargestellten Räder 13 mit einer Hilfsschiene 17 versehen, die über den Rädern 13 liegt. Diese Schiene 17 hat einen L-förmigen Querschnitt und sie ist in einer bekannten Weise an den stehenden Partien 18 der Gestelle 1 befestigt.

An der anderen Seite des Bedienungsgerätes 10 befindet sich eine Transportvorrichtung 20 für die Materialbehälter 5. Diese Vorrichtung 20 erstreckt sich zwischen dem Bedienungsgerät 10 und einer Maschine 21 zur Verarbeitung des sich in den Behältern 5 befindende Materials 6.

Die Transportvorrichtung 20 weist eine Transportbahn auf, die aus zwei Transportstrecken 22 und 23 besteht. Im dargestellten Beispiel befinden sich diese Transportstrecken 22 und 23 übereinander. Die obere Transportstrecke 21 dient im dargestellten Beispiel zur Beförderung beladener Materialbehälter 5 zur Verarbeitungsmaschine 21, während die untere Strecke 23 zum Abtransport leerer Behälter 5 zurück zum Bedienungsgerät 10 ausgenützt wird. An den beiden Enden der Transportbahn 22, 23 befindet sich je ein Hubtisch 24 und 25.

Die jeweilige Transportstrecke 22 bzw. 23 besteht aus einzelnen, gesondert antreibbaren und sich in einem kleinen Abstand voneinander befindlichen Transportabschnitten 26. Diese Abschnitte 26 sind feststehend und sie weisen sich in einem Abstand voneinander befindliche Paare von Kettenrädern 28 und 29 auf, die auf einer gemeinsamen Welle (nicht dargestellt) befestigt sind. Über diese Kettenräder 28 und 29 sind Ketten 30 geführt. Von diesen Paaren von Ketten 30 und den Kettenrädern 28 bzw. 29 ist jeweils nur das vordere Glied dargestellt. Auf den Ketten 30 liegt jeweils eine oben flache Palette 31 auf, die zur Aufnahme eines der Materialbehälter 5 bestimmt ist.

Die Hubtische 24 und 25 sind als bekannte Scherentische mit einer oberen Platte 32 und einer unteren Platte 33 ausgeführt, zwischen welchen sich ein Paar von Scheren 34 und 35 befindet. In der oberen Tischplatte 32 ist jeweils ein Transportabschnitt 26 integriert, so dass diese Transportabschnitte 26 mit der jeweiligen Tischplatte 32 gehoben und gesenkt werden können.

Der Materialbehälter 5 weist einen ersten, unteren Abschnitt 51 auf, der zur Aufnahme flächenhafter und noch nicht be- bzw. verarbeiteter Materialstücke 6 bestimmt ist. Zu diesem Zweck weist dieser Materialabschnitt bzw. Materialteil 51 des Materialbehälters 5 einen rostförmigen und aus parallel zueinander verlaufenden Profilstücken 53 bestehenden Boden 50 auf, wobei die Endpartien der parallelen Profilstücke 53 mit Hilfe querverlaufender Profilstücke 54 untereinander verbunden sind. An der Aussenseite der genannten Profilstücke 53 und 54 sind aufwärts gerichtete Anschläge 55 angebracht, deren freie Stirnfläche 56 in Richtung gegen das Innere des Materialabschnittes 51 hin abgeschrägt ist. Auf dem Boden 50 liegt beispielsweise tafelförmiges Material 6, wie dies in Fig. 1 dargestellt ist.

Der Materialbehälter 5 weist ferner einen zweiten, oberen Abschnitt 52 auf, der im unteren Abschnitt 51 liegen kann und der zur Aufnahme von Resten 57 des sich im unteren Abschnitt 51 befindlichen Materials 6 bestimmt ist. Dieser Restenabschnitt 52 weist einen Boden 58 auf, über dem sich eine Umrandung 59 erhebt. Im dargestellten Beispiel ist der Restenabschnitt 52 viereckig und die Umrandung 59 besteht aus rechtwinklig zueinander stehenden und untereinander verbundenen Profilstücken. Etwa in der Mitte der längeren Abschnitte der Umrandung 59 befindet sich eine Verstärkungsrippe 60, deren Enden an die Umrandung 59 angeschlossen sind und deren Unterseite mit dem Boden 58 verbunden ist. Die Umrandung 59 ist mit Öffnungen 61 versehen, deren Achse in einer horizontalen Ebene liegt. Diese Öffnungen 61 dienen als Mittel, die es ermöglichen, dass eine sich an der Brüucke 7 des Bedienungsgerätes 10 befindliche Greifvorrichtung 71 mit dem Restenabschnitt 52 in Eingriff gelangen kann. In Fig. 1 sind zwei aus den Abschnitten 51 und 52 bestehende Materialbehälter 5 im zusammengebauten Zustand dargestellt, die sich im Gestell 1 befinden.

In Fig. 3 sind weitere Einzelheiten der Brücke 7 zur Handhabung der Materialbehälter 5 in einem vertikalen Schnitt und perspektivisch dargestellt. Die Brücke 7 weist einen unteren Teil 65 auf, der an sich bekannte und beidseits aus dem Unterteil 65 ausfahrbare teleskopische Glieder enthält. Die Vorderteile dieser Glieder können unter die sich in den Gestellen 1 befindlichen Materialbehälter 5 gelangen und sie können bei einer aufwärts gerichteten Bewegung der Brücke 7 den jeweiligen Behälter 5 heben. Durch Zusammenziehen der teleskopischen Glieder gelangt der jeweilige Behälter in das Innere der Brücke 7 und somit auch des Bedienungsgerätes 10. Hierauf kann das Bedienungsgerät 10 seine Fahrt beispielsweise zur bereits genannten Transportvorrichtung 20 antreten.

An den unteren und horizontal liegenden Tragteil 65 schliessen sich vertikale Abschnitte 66 der Brücke an, die zur Führung der Brücke 7 entlang den Schenkeln 67 des vertikalen Teiles 15 des Bedienungsgerätes 10 ausgebildet sind. Oben erstreckt sich in der Brücke 7 ein Verbindungsteil 68 zwischen den Führungsteilen 66, dessen Querschnitt U-förmig ist. Dieser Verbindungsteil 68 öffnet sich nach unten. Die Führungsteile 66 der Brücke 7 sind im Querschnitt ebenfalls U-förmig und sie öffnen sich nach aussen hin so, dass zwischen den Schenkeln 69 und 70 des jeweiligen Führungsteiles 66 die innere Randpartie des jeweiligen Schenkels 67 des Vertikalteiles 15 liegt. Im Inneren der U-förmigen Ausnehmung des Führungsteils 66 ist oben und unten je ein Paar von Rollen 62 und 63 angeordnet, die auf den Seitenflächen des jeweiligen Schenkels 67 abrollen. Dank diesen Rollenpaaren 62 und 63 kann sich die Brücke 7 entlang den Schenkeln 67 des Vertikalteiles 15 des Bedienungsgerätes 10 ohne weiteres bewegen.

Im oberen Bereich der Brücke 7 befindet sich eine Vorrichtung 71 zum Ergreifen des Restenabschnittes 52 des in die Brücke 7 eingebrachten Materialbehälters 5. Diese Greifvorrichtung 71 enthält einen horizontal angeordneten Rahmen 72, dessen Abschnitte 80, 81 und 82 aus Winkelstücken von L-förmigem Querschnitt bestehen. Im Bereich der Führungsabschnitte 66 der Brücke 7 sind die kürzeren Rahmenabschnitte 82 mit vertikalen Platten 73 versehen, die Rollen 74 tragen. Diese Rollen 74 rollen auf der Aussenseite der Schenkel 69 und 70 des jeweiligen Führungsabschnittes 66 ab, so dass der Rahmen 72 der Greifvorrichtung 71 entlang den Führungsabschnitten 66 in vertikaler Richtung bewegt werden kann. Zu diesem Zweck sind im Verbindungsteil 68 der Brücke 7 Umlenkrollen 77 untergebracht, über welche ein Seil 78 oder dgl. geführt wird. Das eine Ende eines solchen Zuggliedes 78 ist an den vertikalen Rahmen 72 angeschlossen, während das andere Ende des Zuggliedes 78 mit einem Hydraulikzylinder 79 verbunden ist. Durch die Betätigung des Hydraulikzylinders 79 lässt sich der Ramen 72 somit senken und heben. Durch zusätzliche Umlenkrollen (nicht dargestellt) kann man erreichen, dass die Zugorgane 78, die an die beiden gegenüberliegenden Seiten 82 des Rahmens 72 angeschlossen sind, durch einen einzigen Hydraulikzylinder 79 betätigbar sind.

In den Längsteilen 80 und 81 des Rahmens 72 der Greifvorrichtung 71 sind rohrförmige Wellen 84 schwenkbar gelagert, von welchen Haken 85 und 86 herabhängen. Auf jeder der Wellen 84 können, je nach Bedarf, zwei oder mehr solche Haken 85 und 86 befestigt sein. Die Spitzen 87 und 84 solcher Haken 85 und 86 können in die Öffnungen 61 in der Umrandung 59 eines der Restenbehälter 52 eindringen, wodurch eine lösbare Verbindung zwischen der Greifvorrichtung 71 und dem betreffenden Restenbehälter 52 entsteht. Durch eine aufwärts gerichtete Bewegung des Rahmens 72, die durch den Hydraulikzylinder 79 verursacht wird, kann der Restenbehälter 52 vom unteren Behälterteil 51 abgehoben werden. An den Enden der Wellen 84 sind herabhängende Nebel 89 und 90 angebracht, auf welche Rollen 91 drücken können, die durch einen weiteren Hydraulikzylinder 92 betätigbar sind.

Die Bewegungen des Bedienungsgerätes 10 lassen sich vorprogrammieren. Wenn plattenförmiges Material von einer bestimmten Dicke dem Lager entnommen werden soll, dann bewegt sich das Bedienungsgerät entlang den Gestellen 1 bis zu jener Stelle, wo sich der dieses Material enthaltende Materialbehälter 5 befindet. Während dieser Fahrt bewegt sich, wenn erforderlich, auch die Brücke 7, und zwar so, dass sie jene Höhe erreicht, auf der sich der gesuchte Behälter 5 befindet. Der Behälter wird durch die teleskopische Aufnahmevorrichtung 65 dem Gestell 1 entnommen und in die Brücke 7 gebracht. Jetzt wird entschieden, ob sich das erforderliche Materialstück unter den Resten im oberen Behälterteil 52 befindet oder ob man eine "frische" Platte 6 aus dem unteren Behälter 51 verwenden muss.

Wenn ein Materialstück aus dem Restenbehälter 52 genügt, dann wird dieses dem Behälter 5 entnommen und das Bedienungsgerät 10 kann den Behälter 5 danach wieder versorgen. Wenn sich kein geeignetes Stück unter den Resten befindet, dann wird der erste Hydraulikzylinder 79 so bedient, dass der Rahmen 72 der Greifvorrichtung 71 so weit abgesenkt wird, bis die Spitzen 87 und 88 der Haken 85 und 86 den Öffnungen 61 in der Umrandung 59 des Restenbehälters 52 gegenüberstehen. Dann werden die zweiten Hydraulikzylinder 92 so betätigt, dass die Rollen 91 sich zurückziehen. Dadurch werden die Hebel 89 und 90 an den Wellen 84 und 85 freigegeben und die Vorderpartien 87 und 88 der Haken 85 und 86 können in die Öffnungen 61 des Restenbehälters 52 einfahren. Hiernach wird der erste Hydraulikzylinder 79 so betätigt, dass sich der Rahmen 72 samt dem Restenbehälter 52 aufwärts bewegt. Dadurch wird der Inhalt des unteren Materialteils 51 des Behälters 5 frei. Jezt kann die erforderliche Menge noch unbehandelten Materials 6 dem unteren Behälterteil 51 entnommen werden. Dann wird der obere Behälterteil 52 in den unteren Behälterteil 51 wieder abgesenkt und der Behälter 5 kann in der bereits erwähnten Weise versorgt werden.

Mit Hilfe des genannten Bedienungsgerätes 10 kann der jeweilige Materialbehälter 5 jedoch auch bis zur Transportbahn 20 gebracht werden. Wir nehmen an, dass durch die Verabeitungsmaschine 21 nur "frisches" Material 6 aus dem unteren Behälterteil 51 verarbeitet wird. Der Restenbehälter 52 wird von einem ausgewählten Materialbehälter 5 in der beschriebenen Weise angehoben und in dieser Lage wird er vorläufig gehalten. Die Tischplatte 32 des ersten Hubtisches 24 wird in ihre obere Stellung gebracht, wo der Transportabschnitt 26 vom ersten Hubtisch 24 den unteren Teil 51 des Materialbehälters 5 empfängt und dem ersten Abschnitt 26 der oberen Transportstrecke 22 überreicht, um diesen bis zu der Maschine 21 zu befördern. Nach der Entleerung dieses Behälterteils 51 durch die Maschine 21 wird die Tischplatte 32 des zweiten Hubtisches 25 mit dem leeren Behälterteil 51 abgesenkt und dieser wird dem nachgeschalteten Abschnitt 26 der unteren Transportstrecke 23 übergeben.

In der Zwischenzeit wird auch die Tischplatte 32 des ersten Hubtisches 24 abgesenkt so dass sie einen leeren unteren Teil 51 eines Materialbehälters 5 von dem diesem Tisch 24 vorgeschalteten Transportabschnitt 26 der unteren Strecke 23 empfangen kann. Dieser Abschnitt 51 wird in die Brücke 7 des Bedienungsgerätes 10 gebracht und mit dem Restenteil 52 überdeckt, der in der Brücke 7 wartete. Jetzt kann der leere Behälter 5 entweder mit neuem Material gefüllt werden oder er wird im Gestell 1 in der beschriebenen Weise versorgt.

Im dargestellten Beispiel enthält die jeweilige Transportstrecke 22 und 23 nur einen Transportabschnitt 26. In der Tat werden diese Strecken 22 und 23 jedoch mehrere und getrennt voneinander antreibbare Abschnitte 26 aufweisen, wobei nicht alle Abschnitte 26 mit Behälterteilen 51 besetzt sein müssen. Eine Reihe von Behältern 51 auf den Abschnitten 26 der oberen Transportstrecke 22 stellt einen Vorrat an Material dar, das durch die Maschine 21 zu verarbeiten ist. Der Arbeitsrhythmus der Maschine 21 kann somit verschieden sein vom Arbeitsrhythmus des Bedienungsgerätes 10 und trotzdem kann eine kontinuierliche Versorgung der leistungsfähigen Maschine 21 mit Rohmaterial 6 sichergestellt sein. Die Anzahl der unter Umständen freien Abschnitte 26 der unteren Strecke 23 kann Wartezeiten für leere Behälterteile 51 sicherstellen, bis diese durch das Bedienungsgerät 10 abgeholt werden.

Es versteht sich, dass die genannten Transportstrecken 22 und 23 auch nebeneinander angeordnet sein können. In einem solchen Fall müssen die Platten der Tische 24 und 25 in einer horizontalen Ebene verschiebbar sein.

**Patentansprüche**

1. Einrichtung zur Lagerung von flächenhaften Gegenständen, mit wenigstens einem Gestell (1), mit wenigstens einem Behälter (5) für die Gegenstände (6), wobei dieser Behälter im Gestell untergebracht sein kann und mit einem Bedienungsgerät (10), mitt dessen Hilfe der bzw. die Behälter gehandhabt werden können, dadurch gekennzeichnet, dass der Behälter (5) einen ersten, unteren Abschnitt (51) zur Aufnahme der flächenhaften Gegenstände (6) aufweist, dass der Behälter einen zweiten, oberen Abschnitt (52) aufweist, der zur Aufnahme von Resten (57) des Materials aus dem unteren Behälterabschnitt (51) ausgeführt ist, dass dieser obere Abschnitt (52) vom unteren Abschnitt (51) trennbar und in diesem liegend angeordnet ist, und dass das Bedienungsgerät (10) mit einer Vorrichtung (71) zur Ergreifung des oberen Behälterabschnittes (52) versehen ist.

2. Einrichtung nach Anspruch 1, dadurch gekennzeichnet, dass an den Boden (58) des Restenabschnittes (52) des Materialbehälters (5) sich eine Umrandung (59) anschliesst, dass diese Umrandung mit Mitteln (61) versehen ist, die das Ergreifen des Restenabschnittes (52) durch die Greifvorrichtung (71) am Bedienungsgerät (10) ermöglichen und dass die genannten Mittel (61) beispielsweise als Öffnungen in der Umrandung (59) ausgeführt sind.

3. Einrichtung nach Anspruch 2, dadurch gekennzeichnet, dass die Umrandung (59) etwa viereckig ist und dass zwischen zwei einander gegenüberliegenden Seitenabschnitten der Umrandung sich eine Verstärkungsrippe (60) befindet, die mit dem Boden (58 des Restenabschnittes (52) verbunden ist.

4. Einrichtung nach Anspruch 1, dadurch gekennzeichnet, dass der untere Abschnitt (51) des Materialbehälters einen rostförmigen Boden (50) aufweist und dass dieser Boden mit aufwärts gerichteten Anschlägen (55) versehen ist, die zur Zentrierung des flächenhaften Materials (6) und/oder des Restenabschnittes (52) des Behälters (5) bestimmt sind.

5. Einrichtung nach Anspruch 1, dadurch gekennzeichnet, dass das Bedienungsgerät (10) eine vertikal bewegbare Brücke (7) aufweist, dass im unteren Bereich dieser Brücke sich eine Vorrichtung (65) zur Aufnahme der Materialbehälter (5) befindet und dass über dieser Aufnahmevorrichtung (65) sich die Greifvorrichtung (71) für den Restenabschnitt (52) befindet.

6. Einrichtung nach Anspruch 1, dadurch gekennzeichnet, dass die Greifvorrichtung (71) einen horizontal liegenden und vertikal verstellbaren Rahmen (72) aufweist, dass von diesem Rahmen Haken herabhängen, die mit den Mitteln (61) am Restenbehälter (52) in Eingriff gelangen können und dass der Rahmen (72) Mittel zur Betätigung der Haken aufweist.

7. Einrichtung nach Anspruch 1, dadurch gekennzeichnet, dass das Bedienungsgerät (10) einen horizontal angeordneten und mit Rädern (12, 13) versehenen Grundrahmen (11) aufweist, dass wenigstens eine der Seitenpartien des Grundrahmens (11) sich unter den Fächern (3) des Gestelles (1) befindet und dass das Gestell mit einer Schiene (17) versehen ist, die sich oberhalb der Räder (13) unter den Konsolen (2) des Gestelles (1) befindet.

8. Einrichtung nach Anspruch 1, dadurch gekennzeichnet, dass das Bedienungsgerät (10) bis zu einer Transportbahn (20) für die Materialbehälter (5) bewegbar ist, dass diese Transportbahn (20) eine erste und eine zweite Strecke (22, 23) zur Beförderung der Materialbehälter (5) aufweist, wobei jeweils eine dieser Strecken (22 bzw. 23) zur Beförderung der Behälter in einer Richtung bestimmt sein kann, und dass an den Enden der Strecken (22, 23) sich Vorrichtungen (24, 25) zur Übertragung der Behälter (5) von der einen zur anderen Strecke (22 bzw. 23) der Förderbahn befinden.

9. Einrichtung nach Anspruch 8, dadurch gekennzeichnet, dass die jeweilige Strecke (22 bzw. 23) aus einzelnen und getrennt antreibbaren Abschnitten (26) besteht und dass die Übertragungsvorrichtungen (24, 25) als Hubtische ausgeführt sind.

**Claims**

1. The device for the storage of flat articles having at least one shelf (1), having at least one container (5) for the flat articles (6) whereby this container can be arranged in said shelf, and having a control apparatus (10) by means of which the container or containers may be handled, characterised in that the container (5) comprises a first, bottom section (51) for receiving the flat articles (6), that the container comprises a second, top section (52) for receiving rests (57) of the material from the bottom section (51), that the top section (52) is detachable from the bottom section and is situated in this bottom section, and characterised in that the control apparatus (10) is provided with a device for seizing the top section (52) of the container.

2. The device as defined in claim 1 wherein an edge (59) adjoins to the bottom (58) of the top section (52) of the container (5), said edge comprises means (61) making the seizing of the top section (52) by the seizing device (71) of the control apparatus (10) possible, and wherein said means (61) is carried out e.g. as openings in said edge (59).

3. The device as defined in claim 2 wherein said edge (59) is approximately square and wherein a reinforcing rib (60) extends between the opposed sides of the edge whereby this rib is connected to the bottom (58) of the top section (52).

4. The device as defined in claim 1 wherein the bottom section (51) of the container has a grate like bottom (50) and wherein this bottom is provided with upward directed stops (55) for centering the flat material (6) and/or of the top section (52) of the container (5).

5. The device as defined in claim 1 wherein the control apparatus (10) is provided with a vertically movable bridge (7), a device (65) for receiving the container (5) is placed in the bottom region of said bridge, and wherein said device (71) for seizing the rests section (52) is placed above the receiving device (65).

6. The device as defined in claim 1 wherein the seizing device (71) comprises a frame (72) which is placed in a horizontal plane and which is vertically movable, hooks are hanging down from this frame which can engage the means (61) of the top section (52) and wherein said frame is provided with means for operating said hooks.

7. The device as defined in claim 1 wherein said control apparatus (10) is provided with a ground frame (11) which is arranged in a horizontal plane and which is provided with wheels (12, 13), at least one of the side parts of said ground frame (11) is placed under the compartments (3) of the shelf (1), and wherein the shelf has a rail (17) which is placed above of those wheels (13) which are placed under the cantilevers (2) of the shelf.

8. The device as defined in claim 1 wherein the control apparatus (10) is movable up to a conveying path (20) for the container (5), this conveying path (20) comprises a first and a second track (22, 23) for conveying said container (5) whereby the respective track (22, 23 resp.) serves for conveying the containers in the respective direction, and wherein devices (24, 25) for displacement of the containers (5) to the respective other track are associated to the ends of said tracks (24, 25).

9. The device as defined in claim 8 wherein the respective track (22, 23 resp.) comprises sections (26) which can separately be driven and wherein said displacement devices are carried out as lift tables.

## Revendications

1. Dispositif de stockage d'objets plats, comportant au moins un bâti (1), présentant au moins un conteneur (5) pour les objets (6), ce conteneur pouvant être logé dans le bâti, et comportant un appareil de commande (10) permettant de manipuler le ou les conteneur(s), caractérisé en ce que le conteneur (5) présente une première section (51) inférieure destinée à recevoir les objets (6) plats, en ce que le conteneur présente une deuxième section (52) supérieure conçue pour recevoir des restes (57) du matériel provenant de la section de conteneur (51) inférieure, en ce que cette section (52) supérieure peut être séparée de la section (51) inférieure et est disposée horizontalement dans celle-ci, et en ce que l'appareil de commande (10) est pourvu d'un dispositif (71) permettant de saisir la section de conteneur (52) supérieure.

2. Dispositif selon la revendication 1, caractérisé en ce que le fond (58) de la section des restes (52) du conteneur (5) de matériel se prolonge par une bordure (59), en ce que cette bordure est pourvue de moyens (61) qui permettent la saisie de la section des restes (52) par le dispositif de saisie (71) sur l'appareil de commande (10) et en ce que les moyens (61) connus sont par exemple des ouvertures pratiquées dans la bordure (59).

3. Dispositif selon la revendication 2, caractérisé en ce que la bordure (59) est à peu près rectangulaire et en ce qu'entre deux sections latérales opposées de la bordure se trouve une nervure de renfort (50) qui est solidaire du fond (58) de la section des restes (52).

4. Dispositif selon la revendication 1, caractérisé en ce que la section (51) inférieure du conteneur de matériel présente un fond (50) en forme de grille et en ce que ce fond est pourvu de butées (55) dirigées vers le haut qui sont destinées à centrer les objets (6) plats et/ou la section des restes (52) du conteneur (5).

5. Dispositif selon la revendication 1, caractérisé en ce que l'appareil de commande (10) comporte un pont (7) pouvant se déplacer verticalement, en ce que dans la zone inférieure de ce pont se trouve un dispositif (65) destiné à recevoir le conteneur (5) du matériel et en ce qu'au-dessus de ce dispositif de réception (65) se trouve le dispositif de saisie (71) pour la section des restes (52).

6. Dispositif selon la revendication 1, caractérisé en ce que le dispositif de saisie (71) comporte un châssis (72) reposant horizontalement et pouvant se déplacer verticalement, en ce que sur ce châssis sont suspendus des crochets qui peuvent pénétrer dans les moyens (61) du conteneur des restes (52) et en ce que le châssis (72) présente des moyens d'actionnement des crochets.

7. Dispositif selon la revendication 1, caractérisé en ce que l'appareil de commande (10) comporte un châssis de base (11) disposé horizontalement et pourvu de roues (12, 13), en ce qu'au moins l'une des parties latérales du châssis de base (11) se trouve au-dessous des rayonnages (3) du bâti (1) et en ce que le bâti est pourvu d'un rail (17) qui se trouve au-dessus des roues (13) et au-dessous des consoles (2) du bâti (1).

8. Dispositif selon la revendication 1, caractérisé en ce que l'appareil de commande (10) peut se déplacer jusqu'à une voie de transport (20) destinée aux conteneurs (5) de matériel, en ce que cette voie de transport (20) présente un premier et un deuxième tronçons (22, 23) pour le transport des conteneurs (5) de matériel, l'un de ces tronçons (22) ou (23) pouvant être destiné au transport des conteneurs dans une direction, et en ce qu'aux extrémités des tronçons (22, 23) se trouvent des dispositifs (24, 25) destinés au transfert des conteneurs (5), de l'un à l'autre tronçon (22) ou (23) de la voie de transport.

9. Dispositif selon la revendication 8, caractérisé en ce que le tronçon (22) ou (23) considéré est constitué de différentes sections (26) pouvant être commandées séparément, et en ce que les dispositifs de transfert (24, 25) sont des plates-formes élévatrices.

Fig.1

0 203 087

Fig. 2

Fig. 3